**Europäisches Patentamt**

**European Patent Office**

**Office européen des brevets**

(19)

(11) Veröffentlichungsnummer: **0 114 046**
A2

# EUROPÄISCHE PATENTANMELDUNG

(12)

(21) Anmeldenummer: 84100075.5

(22) Anmeldetag: 05.01.84

(51) Int. Cl.³: **B 62 D 53/08**

(30) Priorität: 17.01.83 CH 881/83

(43) Veröffentlichungstag der Anmeldung: 25.07.84
Patentblatt 84/30

(84) Benannte Vertragsstaaten: **AT BE DE FR GB IT NL SE**

(71) Anmelder: **GEORG FISCHER AKTIENGESELLSCHAFT,
Mühlentalstrasse 105, CH-8201 Schaffhausen (CH)**

(72) Erfinder: **Jakob, Lothar, Schrotzburgstrasse 1,
D-7702 Gottmadingen (DE)**
Erfinder: **Kopp, Hans, Dorfstrasse 445,
CH-8448 Uhwiesen (CH)**

(54) **Lagerung für eine Sattelkupplung.**

(57) Es wird eine Lagerung für eine Sattelkupplung vorgeschlagen, bei der an der Unterseite einer Kupplungsplatte (1) symmetrisch zu beiden Seiten je ein Lagerbock (2) angeordnet ist. Der Kopf (6) des Lagerbockes ist kugelkalottenförmig ausgebildet, und ist in einer formentsprechend ausgebildeten Ausnehmung eines Einsatzes untergebracht. Diese formschlüssige Verbindung ermöglicht eine nach allen Seiten mögliche Bewegung sowie eine Kompensierung der Spannungen die bei Verwindung des Chassisrahmens auftreten.

Die vorgeschlagene Lagerung ist auch für grosse Sattellasten geeignet. Zudem ist die Lagerung von der Kupplungsplatte her zugänglich, was eine wirtschaftlichere Wartung und Fertigung ermöglicht, denn die Kupplung ist ohne Umstände von oben her demontierbar.

EP 0 114 046 A2

GEORG FISCHER AKTIENGESELLSCHAFT,     8201 Schaffhausen

2359/FzT / 17.2.1983 / MS-ba /

Lagerung für eine Sattelkupplung

Lagerung für eine Sattelkupplung, bei der an der Unterseite einer Kupplungsplatte symmetrisch zu beiden Seiten
je eine Ausnehmung mit einem darin angeordneten Einsatz
vorgesehen ist, in dem sich der Kopf eines Lagerbockes
abstützt.

Bekannt ist eine Lagerung für eine Sattelkupplung aus der
CH-PA Nr. 536 731. Hier wird eine Lagerung vorgeschlagen,
bei der der Gehäusekopf des Lagerbockes sowohl zu der
Kupplungsplatte und zu den Seitenwänden der Tasche als
auch zu dem an der Kupplungsplatte befestigten Riegel
allseitig beweglich und gummigefedert gelagert ist.

Nachteilig bei dieser Ausführung ist insbesondere, dass
die Gummilagerung wegen der grossen auftretenden Kräfte
nicht mehr geeignet ist und stark zerstört wird.

Die vorliegende Erfindung soll die beschriebenen Nachteile beseitigen und eine Lagerung vorschlagen die ohne
Umstände von der Kupplungsplatte her demontierbar und

- 4 -

auswechselbar ist. Die neue Lagerung soll Montageerleichterung für die Fertigung und Wartung bringen. Die Ausgestaltung des Lagergehäuses soll für grosse Kräfte ausgerichtet sein.

Die erfindungsgemässe Lagerung ist durch die Lehre des Anspruches 1 gekennzeichnet.

Weitere vorteilhafte Ausgestaltungen gehen aus den abhängigen Ansprüchen hervor.

In der Zeichnung wird ein bevorzugtes Ausführungsbeispiel der Erfindung näher beschrieben.

Es zeigen:

Fig. 1          eine Draufsicht auf eine Sattelkupplung,

Fig. 2          einen im Schnitt dargestellten Ausschnitt
                aus der Fig. 1, und

Fig. 3          einen Schnitt entlang der Linie III in der
                Fig. 2.

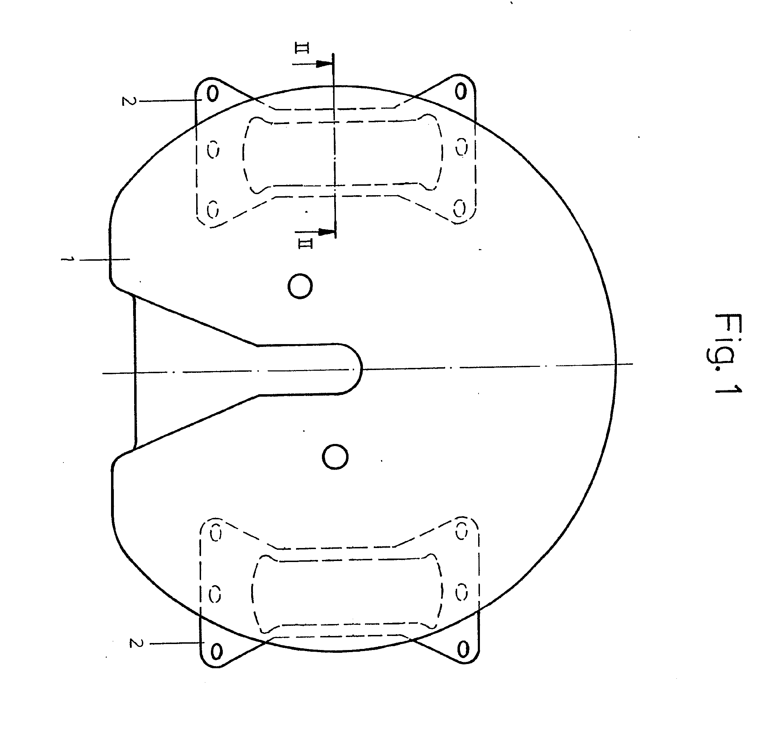

Die Fig. 1 zeigt eine Draufsicht auf eine Sattelkupplung, wobei in einer Kupplungsplatte 1 zu beiden Seiten je ein Schwenklager mit einem Lagerbock 2 angeordnet ist.

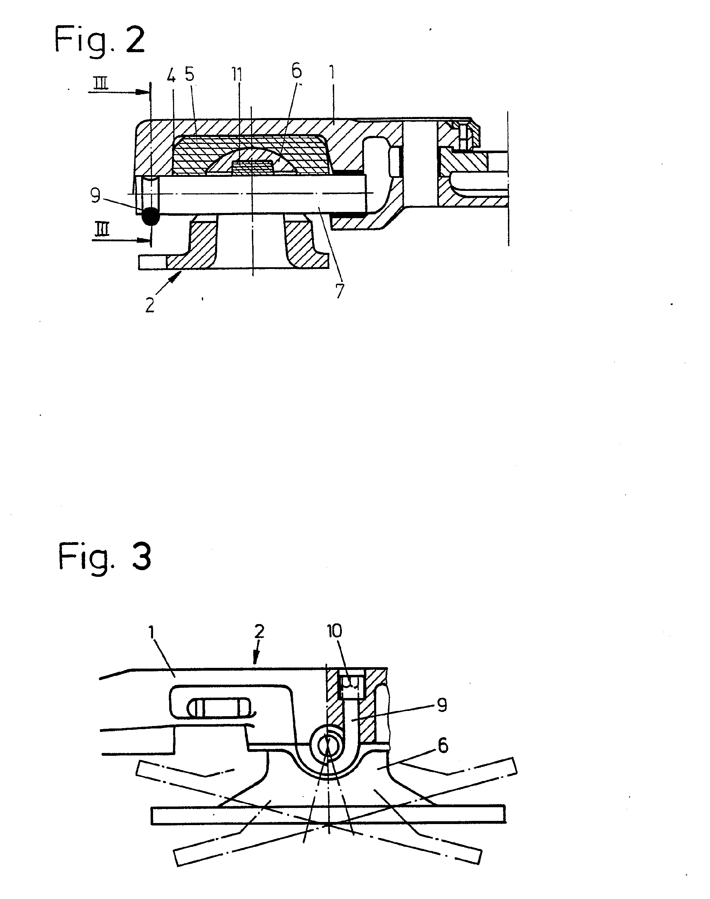

Die Fig. 2 zeigt einen Schnitt durch die Lagerung. In der Kupplungsplatte 1 ist eine Ausnehmung 4 angeordnet in welcher ein Einsatz 5 untergebracht ist. Der Einsatz 5 besteht vorzugsweise aus einem Material mit grosser dämpfender Wirkung z.B. Kunststoff. In diesem Einsatz ist eine

- 5 -

kugelkalottenförmige Ausnehmung angeordnet, die der Kugelkalottenform des Lagerkopfes 6 entspricht. Weitere Ausnehmungen befinden sich im Randbereich des Einsatzes und sind
dem Mantelflächenverlauf des Rohres 7 angepasst. Der Kopf
6 des Lagerbockes ist in diesem Einsatz allseitig bewegbar,
verdrehbar und verwindbar. Die Spannungen, die bei der
Verwindung des Chassisrahmens auf den Lagerbock übertragen
werden, können von diesem ohne Schaden ausgeglichen werden.

Ein Rohr 7 ist quer zur Fahrtrichtung durch den Lagerbock
angeordnet, und steht formschlüssig in Eingriff mit dem
Einsatz 5. Am Ende des Rohres ist eine Bridenanordnung 9
vorgesehen die mit der Kupplungsplatte über Muttern 10
direkt verbunden ist. Dadurch ist der Zugang zur Lagerung
von der Kupplungsplatte her möglich. Im Inneren des
Lagerkopfes 6 kann zur Dämpfung ein Einsatz 11 angeordnet
sein. Der Schraubenverschluss der Spannbriden 9 ist direkt
in der Kupplungsplatte eingelassen und mittels Muttern
befestigt.

Die vorgeschlagene Lagerung hält den höheren Anforderungen
der grösseren Sattellasten stand, wirkt dämpfend und ist
verwindungsarm. Zudem ist eine wirtschaftlichere Herstellung und Wartung der Lagerung möglich.

**P a t e n t a n s p r ü c h e**

2359/FzT

1. Lagerung für eine Sattelkupplung bei der an der Unterseite einer Kupplungsplatte symmetrisch zu beiden Seiten je eine Ausnehmung mit einem darin angeordneten Einsatz vorgesehen ist, in dem sich der Kopf eines Lagerbockes abstützt, dadurch gekennzeichnet, dass der Kopf kugelkalottenförmig ausgebildet ist und mit dem Einsatz formschlüssig und in diesem allseitig beweglich verbunden ist wobei ein quer zur Fahrtrichtung durch den Lagerbock verlaufendes Lagerrohr, das mit der Kupplungsplatte in Verbindung steht, den Kopf des Lagerbockes mit dem Einsatz in Eingriff hält.

2. Lagerung nach Anspruch 1, dadurch gekennzeichnet, dass der Einsatz Aussparungen aufweist, die die Rohrmantelfläche teilweise umschliessen.

3. Lagerung nach Anspruch 1, dadurch gekennzeichnet, dass im Inneren des Lagerkopfes eine Einlage vorgesehen ist, die mit dem Lagerrohr in Kontakt steht.

4. Lagerung nach Anspruch 1, dadurch gekennzeichnet, dass das Lagerrohr mittels einer Bridenverbindung mit der

- 2 -

Kupplungsplatte lösbar befestigt ist.

5. Lagerung nach Anspruch 4, dadurch gekennzeichnet, dass die Bridenverbindung an mindestens einem Rohrende angeordnet ist.

6. Lagerung nach Anspruch 1, dadurch gekennzeichnet, dass das Lagerrohr mindestens teilweise in einer Büchse gelagert ist.

0114046

½  M05·01·84

# Fig. 1

2359/FzT

## Fig. 2

## Fig. 3